(19) Europäisches Patentamt / European Patent Office / Office européen des brevets

(11) **EP 4 528 545 A1**

(12) **EUROPEAN PATENT APPLICATION**

(43) Date of publication:
26.03.2025 Bulletin 2025/13

(21) Application number: 23198857.7

(22) Date of filing: 21.09.2023

(51) International Patent Classification (IPC):
*G06F 16/906* (2019.01) *G06N 3/00* (2023.01)

(52) Cooperative Patent Classification (CPC):
G06F 16/906; G06N 3/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Robert Bosch GmbH
70442 Stuttgart (DE)

(72) Inventors:
• Schirmer, Mona
1051 JL Amsterdam (NL)
• Nalisnick, Eric
1086 ZR Amsterdam (NL)
• Zhang, Dan
71229 Leonberg (DE)

Remarks:
Amended claims in accordance with Rule 137(2) EPC.

(54) **PREDICTING THE PERFORMANCE OF CLASSIFIERS BASED ON DIVERGENCES**

(57)    A method (100) for predicting the performance $P(f^*,x)$ of a given classifier $f^*$ with respect to one or more given samples $x$ of input data, wherein the classifier $f^*$ is configured to map a sample $x$ of input data to a vector $y = f^*(x)$ of classification scores with respect to multiple classes of a given classification, comprising the steps of:
• providing (110) further classifiers that, together with the given classifier $f^*$, form a set $F$ of classifiers $f$;
• computing (120), for the one or more samples $x$, using each classifier $f$ from the set $F$ of classifiers, classification scores $f_k(x)$ with respect to all available classes $k = 1, ... , K$ covered by the classifiers;
• determining (130), for pairs $(f,f')$ of classifiers $f$ and $f'$ from the set $F$, divergences of the classification scores $f_k(x)$ and $f'_k(x)$ for all $k = 1, ... , K$ as pairwise divergences $dis(f,f',x)$ of the classifiers $f$ and $f'$ with respect to the one or more samples $x$; and
• determining (140) the performance $P(f^*,x)$ of the classifier $f^*$ with respect to the one or more samples $x$ based at least in part on pairwise divergences $dis(f^*,f',x)$ between the classifier $f^*$ and other classifiers $f'$.

Fig. 1a

EP 4 528 545 A1

(Cont. next page)

Fig. 1a

$P (f^{*},x)$

150

150a

160

150a

50,51,60,70,80,90

Fig. 1b

**Description**

The present invention relates to predicting the performance of classifiers for input data, and in particular measurement data. In particular, this performance may comprise an expected accuracy of a decision of the classifier, and/or of classification scores on which this decision is based.

Background

When a vehicle or robot is operated on corporate premises or even in road traffic, a continuous monitoring of the environment of the vehicle and/or robot is indispensable. Usually, measurement data of various modalities, such as camera images or radar data, are recorded. The measurement data is very frequently evaluated by means of classifiers that process the measurement data into classification scores with respect to a set of available classes. Very frequently, based on these classification scores, a decision for one class is made.

Classifiers are usually trained on a large dataset of training examples. The accuracy of the classification scores and subsequent decisions outputted by a classifier on samples unseen during training is dependent on whether these samples belong to the domain and/or distribution of the training examples.

In some cases, it is obvious that a "domain shift" between the domain of new measurement data and the domain of the training examples is detrimental to classification accuracy. For example, if the classifier is to distinguish types of traffic signs, and new measurement data indicates the presence of a new traffic sign that has not been seen during the training, there is little hope that this this new traffic sign will be classified correctly. For more subtle "domain shifts", such as changed weather or lighting conditions compared to the conditions in which the training examples were acquired, it is harder to quantify how this will affect the accuracy.

Disclosure of the invention

The invention provides a method for predicting the performance $P(f^*, x)$ of a given classifier $f^*$ with respect to one or more given samples $x$ of input data. This classifier $f^*$ is configured to map a sample $x$ of input data to a vector $y = f^*(x)$ of classification scores with respect to multiple classes of a given classification. Optionally, the classifier $f^*$ may additionally output a decision for one of the available classes. This decision may, for example, be based on the highest classification score.

The performance $P(f^*, x)$ may be measured according to any suitable metric. In a simple example, the performance $P(f^*, x)$ may denote whether the output $y = f^*(x)$ of the classifier is likely to be correct (valid) or not. In another example, the performance $P(f^*, x)$ may measure an uncertainty of the output, and/or an accuracy of the output. In yet another example, the performance $P(f^*, x)$ may denote a classification accuracy that the classifier achieves on a labelled test dataset to which $x$ belongs.

In the course of the method, further classifiers are provided. Together with the given classifier $f^*$, these further classifiers form a set $F$ of classifiers $f$. That is, the set $F$ is an ensemble of classifiers, and the given classifier $f^*$ belongs to this ensemble. In particular, all the classifiers $f$ in the set $F$ may have in common that they have been trained on training examples from a common distribution $D$. The further classifiers $f$ may be determined based on the initial given classifier $f^*$. However, it is also possible that the entire ensemble $F$ is determined first, and the given, to-be-examined classifier $f^*$ is then picked from this ensemble $F$.

For the one or more samples $x$, using each classifier $f$ from the set $F$ of classifiers, classification scores $f_k(x)$ with respect to all available classes $k = 1, ..., K$ covered by the classifiers are computed. For pairs $(f, f')$ of classifiers $f$ and $f'$ from the set $F$, divergences of the classification scores $f_k(x)$ and $f'_k(x)$ for all $k = 1, ... , K$ are determined as pairwise divergences $dis(f, f', x)$ of the classifiers $f$ and $f'$ with respect to the one or more samples $x$. That is, rather than determining deviations between classifiers based on a decision for only one class (e.g., based on a largest classification score), the complete output of the classifier, i.e., the full predictive label distribution, is considered. This is a much more sensitive measure of agreement between classifiers $f$ and $f'$.

Based at least in part on pairwise divergences $dis(f^*, f', x)$ between the classifier $f^*$ and other classifiers $f'$, the sought performance $P(f^*, x)$ of the classifier $f^*$ with respect to the one or more samples $x$ is determined.

It was found that, surprisingly, the uncertainty of the given classifier $f^*$ with respect to the one or more samples $x$, and thus the performance $P(f^*, x)$ of this classifier $f^*$, is correlated with the pairwise divergences $dis(f^*, f', x)$ between the given classifier $f^*$ and other classifiers $f'$. If the classification result $y = f^*(x)$ outputted by the given classifier $f^*$ is uncertain, this basically means that, for example, "the result is 0.7, but it could just as well be anywhere between 0.65 and 0.8". When other classifiers $f$ from the ensemble $F$ that are trained on the same distribution $D$ of training examples are consulted, they might do just that, namely output values anywhere between 0.65 and 0.8.

In principle, an uncertainty of the given classifier $f^*$ could also be explored by varying the input $x$ and examining how the output $y = f^*(x)$ changes. But this is not exactly the same. This presumes that the given classifier $f^*$ should nominally give same or very similar outputs when being given small variations of the original input $x$. However, there is no hard-and-fast guarantee for this. In the context of the concrete application, a small variation of the input $x$ could have a significant meaning.

Therefore, when determining the uncertainty of the given classifier $f^*$, and thus its performance $P(f^*, x)$, it is advantageous to vary the classifier $f$, rather than the input $x$, give the same input $x$ to all classifiers $f$, and examine how the outputs $f'_k(x)$ change compared with the outputs $f^*_k(x)$ of the given classifier $f^*$.

To this end, there are many possible ways to create the ensemble $F$.

For example, the different classifiers $f$ may be trained on the same set $I$ of in-distribution samples $x_I$ of input data from the distribution $D$, but initialized differently. When starting the training, the parameters that characterize the behavior of the classifier $f$ may be initialized randomly, and for each classifier $f$, new random numbers may be picked. If there was no uncertainty, and the performance of each classifier $f$ was perfect, then the training of all classifiers $f$ would converge to a state where they produce one and the same set of outputs $f'_k(x)$. But in the less-perfect, real case, the outputs $f'_k(x)$ will form a distribution that deviates from the distribution of the outputs $f^*_k(x)$ of the given classifier $f^*$ for the same input $x$.

In another example, the different classifiers $f$ may be trained on different sets $I$ of in-distribution samples $x_I$ of input data that are randomly drawn from one and the same distribution $D$. This also measures how homogeneous this distribution $D$ is. If the distribution $D$ is very homogeneous, then a training starting from any randomly drawn set $I$ of in-distribution samples $x_I$ should converge to a state where they produce the same set of outputs fk(x). If the distribution D is not homogeneous, then the different classifiers f trained on the different sets I will learn different things, and converge to different trained states that will produce different outputs $f'_k(x)$ for the same sample $x$.

A particularly advantageous embodiment sets out to measure the performance, and in particular the classification accuracy, for out-of-distribution samples $x_O$ that do not belong to the distribution $D$, but instead belong to another distribution $D'$ that is shifted against $D$ in at least one aspect.

To this end, a set $I$ of in-distribution samples $x_I$ of input data from the distribution $D$ on which the classifiers have been trained is provided. With respect to these the in-distribution samples $x_I$, a performance $P(f^*, x_I)$ of the given classifier $f^*$ is provided. For example, this performance may be an accuracy determined on a set of test samples that are labelled with ground truth classification scores.

A set $0$ of out-of-distribution samples $x_O$ that do not belong to the distribution $D$ is provided. This set $0$ comprises the one or more given samples $x$. Preferably, the out-of-distribution samples $x_O$ all belong to another distribution $D'$ that is shifted against $D$ in at least one aspect, so that they still have something in common. However, it is also possible to use disparate out-of-distribution samples $x_O$, so as to measure a worst-case performance of the classifier $f^*$ for out-of-distribution samples.

For each sample $x_I$ from the set $I$ of in-distribution samples, pairwise divergences $dis(f, f', x_I)$ between classifiers $f$ and $f'$ are determined as in-distribution divergences $dis_I(f,f')$. For each sample $x_O$ from the set $0$ of out-of-distribution samples, pairwise divergences $dis(f, f', x_O)$ between classifiers $f$ and $f'$ are determined as out-of-distribution divergences $dis_O(f, f')$. Thus, for every pair $(f, f')$ of classifiers $f$ and $f'$, one in-distribution divergence $dis_I(f, f')$ and one out-of-distribution divergence $dis_O(f, f')$ result. These two divergences $dis_I(f, f')$ and $dis_O(f, f')$ may be regarded as two coordinates of a point in a plane that can be plotted. Thus, after having worked through all pairs $(f, f')$ of classifiers $f$ and $f'$, a point cloud results. It was found that this point cloud encodes a functional relationship $R(dis_O(f, f'), dis_I(f, f'))$ between out-of-distribution divergences $dis_O(f, f')$ and in-distribution divergences $dis_I(f, f')$. Therefore, this functional relationship $R(dis_O(f,f'), dis_I(f,f'))$ is estimated based on the available values of $dis_O(f,f')$ and $dis_I(f,f')$ for all pairs $(f, f')$.

Based at least in part on this functional relationship $R$ and the known performance $P(f^*, x_I)$ of the given classifier $f^*$ with respect to the in-distribution samples $x_I$, the performance $P(f^*, x)$ is determined. This is based on the surprising finding that the performances $P(f^*, x_O)$ with respect to out-of-distribution samples $x_O$ and $P(f^*, x_I)$ with respect to in-distribution samples $x_I$ are linked by a relationship that is the same as, or at least similar to, the relationship R that links out-of-distribution divergences $dis_O(f,f')$ and in-distribution divergences $dis_I(f,f')$.

In particular, starting from a distribution $D$ on which the classifiers $f$ were trained, it can be examined which domain shifts to a new distribution $D'$ of input samples $x$ have which effects on the performance $P(f^*, x_I)$, e.g., on the classification accuracy.

In one use case, where a self-driving vehicle or robot monitors its environment and classifies the obtained measurement data as to which objects are present in the environment, a domain shift might be caused by changing weather conditions or seasons (such as summer to winter). Another reason that may give rise to a domain shift is operation in an unseen environment, such as in a country different from the one in which the training examples were acquired. The same applies to robotic applications where unseen environments or anomalies occur all the time in the input data and could lead to a system failure if the classifier outputs an unusable result. The effects of input domain shifts may be studied using the method proposed here, and if the performance $P(f^*, x_I)$ of the classifier $f^*$ drops too low, remedies may be applied. For example, the classifier $f^*$ may be given an additional training on the distribution $D'$ where it is not performing well.

Domain shifts may also be caused by disturbances or corruptions to input images, such as noise. For example, if the input sample $x$ is an image, the quality of this image may be degraded by such noise, poor exposure conditions, precipitation (such as rain or snow), fog or dirt on the lens used for acquiring the image. The effects of such domain shifts may be tested with the method proposed here in order to measure whether the classifier $f^*$ is robust enough to tolerate such disturbances that may occur during operation of the vehicle.

The same applies generically to situations where one existing technology that comprises a classifier is to be transferred to a new situation, application or context that will give rise to different input data, i.e., to a domain shift. By examining the performance $P(f^*, x_I)$ of the classifier $f^*$ on the new distribution using the method proposed here, it may be determined whether the classifier can still be used in the new situation, application or context as it is, which would save the effort and expense for a further training.

For example, in automotive applications, a classifier may initially be trained for use by a first car manufacturer in a first type of cars with data from a first domain. Later, there may be a need to use the same classifier in a second type of cars from a second car manufacturer, where the to-be-classified data comes from a second, shifted domain. With the present method, the potential performance may be measured using unlabeled data from the second domain. Based on the outcome, it may then be decided whether the already trained classifier may be re-used in its present state, or whether further training on labelled data from the second domain is needed.

In a further particularly advantageous embodiment, in the course of determining the performance $P(f^*, x)$, a functional relationship $Q$ between performances $P(f, x_O)$ of classifiers $f$ from the set $F$ with-respect to out-of-distribution samples $x_O$ and performances $P(f, x_I)$ from the set $F$ with-respect to in-distribution samples $x_I$ is determined based on the already determined functional relationship $R$. Using this functional relationship $Q$, the sought performance $P(f^*, x)$ is then determined from the known performance $P(f^*, x_I)$ of the given classifier $f^*$ with respect to the in-distribution samples $x_I$.

For example, in some settings, the already determined functional relationship $R$ may be re-used as it is as the functional relationship $Q$. In other settings, the already determined functional relationship $R$ may give away only part of the quantities that characterize the functional relationship $Q$. For example, if the functional relationships $R$ and $Q$ are both linear, they are both characterized by a slope and an additive bias. The slope from the already known functional relationship $R$ may be re-used in the functional relationship $Q$. There may be settings where the bias from the functional relationship $R$ may be re-used in the functional relationship $Q$ as well, and settings where the bias cannot be re-used and has to be determined in another way.

For example, once the functional relationship $Q$ has been determined, the known performance $P(f^*, x_I)$ of the given classifier $f^*$ with respect to the in-distribution samples $x_I$ may be plugged into this functional relationship $Q$ to arrive at the sought performance $P(f^*, x)$ with respect to a particular sample $x$, or $P(f^*, x_O)$ with respect to any out-of-distribution sample $x_O$ from the set $0$.

In a further particularly advantageous embodiment, in the course of estimating the functional relationship $R(dis_O(f,f'), dis_I(f, f))$, a functional dependency of $dis_O(f, f')$ from $dis_I(f, f')$ that comprises free parameters is set up. The free parameters are then optimized to fit the functional relationship $R(dis_O(f, f'), dis_I(f, f'))$ to the available in-distribution divergences $dis_I(f, f')$ and out-of-distribution divergences $dis_O(f,f')$. The more pairs $(f, f')$ of classifiers $f$ and $f'$ contribute values $dis_O(f,f')$ and $dis_I(f,f')$, the more complex such a fit can be.

As discussed before, in a further particularly advantageous embodiment, the functional relationship $R(dis_O(f,f'), dis_I(f,f'))$ is chosen to comprise a linear relationship with a bias and a slope. This is a well-tractable approximation that has been empirically shown to model the dependency with a sufficient accuracy.

In a further particularly advantageous embodiment, the performance $P(f^*,x)$ of the classifier $f^*$ with respect to the one or more samples $x$ is determined based at least in part on pairwise divergences $dis(f^*, f', x)$ of the given classifier $f^*$ on the one hand and other classifiers $f'$ from the set $F$ on the other hand. By specifically selecting these pairwise divergences, a notion of how probable a misclassification of the particular sample $x$ is may be determined. This requires less computation than determining all pairwise divergences for all pairs of classifiers $(f, f')$ of classifiers $f$ and $f'$. For many applications, some sample-wise notion of the probability of misclassification is sufficient, and a full knowledge of the behavior for a complete shifted distribution $D'$ of input data is not required. For example, the full analysis of the behavior for a shifted distribution $D'$ may be used when planning the training and/or deployment of the classifier $f^*$, and the faster sample-wise analysis may be used for on-line monitoring of the classifier $f^*$.

For example, the pairwise divergences $dis(f^*,f',x)$ may be aggregated, and the performance $P(f^*, x)$ of the classifier $f^*$ may be determined based on the result of this aggregating. For example, an average divergence or disagreement $dis(f^*, f', x)$ may serve as a good indication of the probability of misclassification.

In one particularly advantageous embodiment, determining the performance $(f^*, x)$ comprises: in response to determining that the result of the aggregating fulfils a predetermined criterion, determining that the sample $x$ is misclassified by the given classifier $f^*$. For example, a threshold value for the result of the aggregation may be set. If the average disagreement between the opinion of the given classifier $f^*$ and the other classifiers $f$ is larger than this threshold value, then the opinion of the given classifier $f^*$ may be deemed wrong. This is in some way analogous to a driver who encounters hundreds of wrong-way drivers: it is then more probable that only one driver has a big problem.

In a further particularly advantageous embodiment, the pairwise divergences $dis(f, f', x)$ of the classifiers $f$ and $f'$ may be computed as f-divergences that measure the difference between probability distributions defined by the classification scores $f_k(x)$ and $fk(x)$ as samples, respectively. In many classification tasks, there is a sufficiently high number $K$ of classes $k$, such that the classification scores $f_k(x)$ and $fk(x)$ for $k = 1, \dots, K$ can qualify as distributions. For example, if traffic signs or other traffic-relevant objects are to be classified, there are hundreds of classes.

Exemplary f-divergences include the Hellinger distance, the Kullback-Leibler divergence, and/or the reverse Kullback-Leibler divergence, is chosen as the f-divergence.

The Hellinger distance $dis^{HD}(f, f', x)$ is given by

$$dis^{HD}(f, f', x) = \frac{1}{\sqrt{2}} \sqrt{\sum_{k=1}^{K} \left( \sqrt{f_k(x)} - \sqrt{f'_k(x)} \right)^2}.$$

This distance is symmetric and satisfies the triangle inequality, thereby rendering it a true metric on the space of probability distributions. Notably, it lies in the interval [0,1], making it straight-forward for comparison.

The Kullback-Leibler divergence $dis^{KL}(f, f', x)$ is given by

$$dis^{KL}(f, f', x) = \sum_{k=1}^{K} f_k(x) \log \frac{f_k(x)}{f'_k(x)}.$$

Unlike the Hellinger distance, this is non-symmetric. Therefore, there is also a reverse notion of it. The reverse Kullback-Leibler divergence $dis^{rKL}(f, f', x)$ is given by

$$dis^{rKL}(f, f', x) = \sum_{k=1}^{K} f'_k(x) \log \frac{f'_k(x)}{f_k(x)}.$$

In particular, the sample $x$ of input data may be chosen to comprise an image, and/or a point cloud, of measurement values. An image typically comprises a regular and contiguous grid of pixels to which values of at least one measurement quantity, such as a light intensity, are assigned as pixel values. A point cloud assigns values of at least one measurement quantity to points in three-dimensional space that are neither contiguous nor regularly spaced. For example, reflections of a radar or lidar probing ray may occur anywhere in space without having regard to a pre-defined grid, and they occur only at a sparse set of places in the total volume occupied by the monitored scenery. Therefore, unlike the output of cameras which typically comes in the form of images, the output of radar or lidar sensors frequently comes in the form of point clouds.

In a further particularly advantageous embodiment, based on the determined performance $P(f^*,x)$, an actuation signal is computed. A vehicle, a driving assistance system, a robot, a surveillance system, a quality assurance system, and/or a medical imaging system, is actuated with the actuation signal. In this manner, the probability is improved that the reaction performed by the respective actuated system in response to the actuation signal will be more appropriate in the situation characterized by the at least one sample $x$ of input data. For example, the intensity with which a self-driving car reacts to a classified object according the sample $x$ may be chosen to be commensurate with the performance with the performance $P(f^*, x)$ of the used classifier $f^*$ with respect to the sample $x$. For example, a full emergency stop, an evasion maneuver or another action that may carry the risk of an accident may be avoided if the performance $P(f^*, x)$ for the sample $x$ is not good enough, i.e., if the classification of the object is not fully certain.

In another example, in response to determining that the performance $P(f^*,x)$ of the used classifier $f^*$ with respect to the sample $x$ is not good enough, a different classifier $f$ with a better performance $P(f, x)$ may be applied on the sample $x$. For example, this different classifier $f$ may reside in a cloud. Using it all the time would therefore entail transferring large amounts of data, which may be expensive or otherwise limited in mobile applications. Also, using this further classifier may carry pay-per-use charges, so using the usual given classifier $f^*$ as long as its performance $P(f^*, x)$ is sufficient has a potential of being both faster and cheaper.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory machine-readable data carrier, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In a further particularly advantageous embodiment, the input measurement data is obtained from at least one sensor. From the final classification result, an actuation signal is obtained.

In the following, the invention is described using Figures without any intention to limit the scope of the invention.

Description of the Figures

The Figures show:

Figure 1 Exemplary embodiment of the method 100 for predicting the performance $P(f^*, x)$ of a given classifier $f^*$;

Figure 2 Illustration of the effect of switching from a disagreement notion based on the top-1 class to disagreement notions $dis(f,f')$ based on the full outputs of the classifiers $f$ and $f'$.

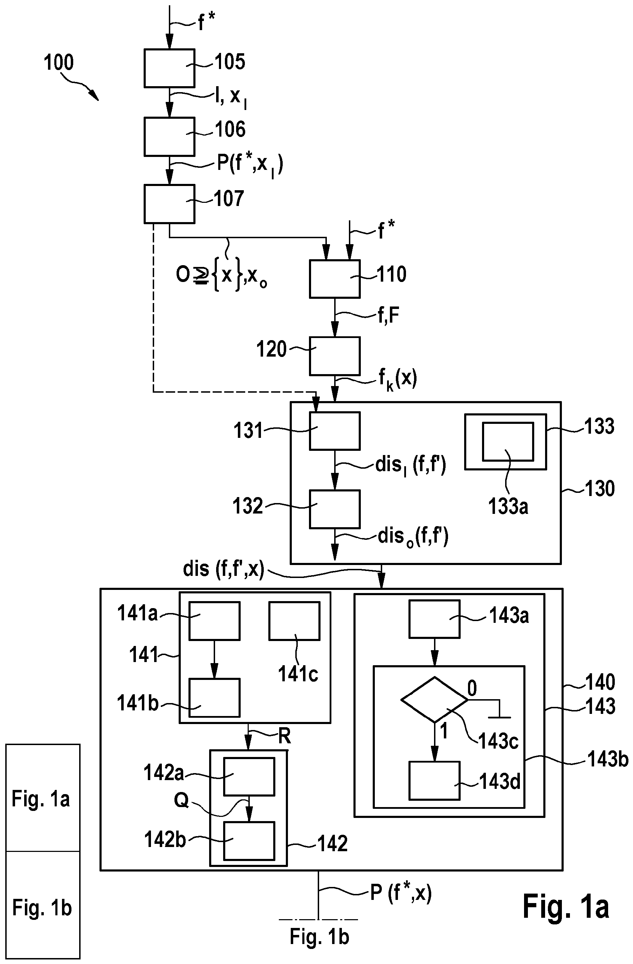

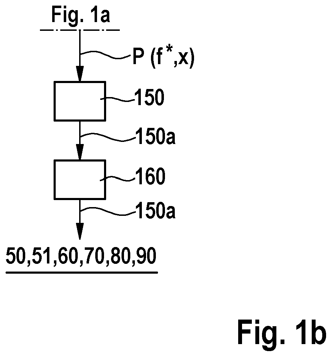

Figure 1 is a schematic flow chart of an embodiment of the method 100 for predicting the performance $P(f^*, x)$ of a given classifier $f^*$ with respect to one or more given samples $x$ of input data.

According to block 105, a set $I$ of in-distribution samples $x_I$ of input data from the distribution $D$ on which the classifiers have been trained may be provided. According to block 106, a performance $P(f^*, x_I)$ of the given classifier $f^*$ with respect to the in-distribution samples $x_I$ may then be provided. According to block 107, a set $O$ of out-of-distribution samples $x_O$ that do not belong to the distribution $D$ may be provided. As discussed before, this set $O$ is then chosen to comprise the one or more given samples $x$.

In step 110, further classifiers are provided, such that these classifiers, together with the given classifier $f^*$, form a set $F$ of classifiers $f$.

In step 120, for the one or more samples $x$, using each classifier $f$ from the set $F$ of classifiers, classification scores $f_k(x)$ with respect to all available classes $k = 1, ... , K$ covered by the classifiers are computed.

In step 130, for pairs $(f, f')$ of classifiers $f$ and $f'$ from the set $F$, divergences of the classification scores $f_k(x)$ and $f'_k(x)$ for all $k = 1, ... , K$ are determined as pairwise divergences $dis(f, f', x)$ of the classifiers $f$ and $f'$ with respect to the one or more samples $x$.

If a set $I$ of in-distribution samples $x_I$ and a set $O$ of out-of-distribution samples $x_O$ have been provided according to blocks 105 to 107, then, according to block 131, for each sample $x_I$ from the set $I$ of in-distribution samples, pairwise divergences $dis(f, f', x_I)$ between classifiers $f$ and $f'$ may be determined as in-distribution divergences $dis_I(f,f')$. Likewise, according to block 132, for each sample $x_O$ from the set $O$ of out-of-distribution samples, pairwise divergences $dis(f, f', x_O)$ between classifiers $f$ and $f'$ may be determined as out-of-distribution divergences $dis_O(f, f')$.

According to block 133, the pairwise divergences $dis(f, f', x)$ of the classifiers $f$ and $f'$ may be computed as f-divergences that measure the difference between probability distributions defined by the classification scores $f_k(x)$ and $f'_k(x)$ as samples, respectively.

According to block 133a, the Hellinger distance, the Kullback-Leibler divergence, and/or the reverse Kullback-Leibler divergence, may be chosen as the f-divergence.

In step 140, the performance $P(f^*, x)$ of the classifier $f^*$ with respect to the one or more samples $x$ is determined based at least in part on pairwise divergences $dis(f^*, f', x)$ between the classifier $f^*$ and other classifiers $f'$.

If in-distribution divergences $dis_I(f, f')$ and out-of-distribution divergences $dis_O(f,f')$ have been determined according to blocks 131 and 132, then, according to block 141, a functional relationship $R(dis_O(f,f'),dis_I(f,f'))$ between out-of-distribution divergences $dis_O(f,f')$ and in-distribution divergences $dis_I(f,f')$ may be estimated. According to block 142, based at least in part on this functional relationship $R$ and the known performance $P(f^*,x_I)$ of the given classifier $f^*$ with respect to the in-distribution samples $x_I$, the performance $P(f^*,x)$ may then be determined.

According to block 141a, a functional dependency of $dis_O(f, f')$ from $dis_I(f, f')$ that comprises free parameters may be set up. According to block 141b, the free parameters may then be optimized to fit the functional relationship $R(dis_O(f, f'),$

$dis_I(f, f')$) to the available in-distribution divergences $dis_I(f,f')$ and out-of-distribution divergences $dis_O(f, f')$.

According to block 141c, the functional relationship $R(dis_O(f,f'), dis_I(f,f'))$ may specifically be chosen to comprise a linear relationship with a bias and a slope.

According to block 142a, based on the functional relationship $R$, a functional relationship $Q$ between

- performances $P(f, x_O)$ of classifiers $f$ from the set $F$ with-respect to out-of-distribution samples $x_O$ on the one hand and
- performances $P(f, x_I)$ from the set $F$ with-respect to in-distribution samples $x_I$ on the other hand

may be determined. According to block 142b, the performance $P(f^*,x)$ may be determined from the known performance $P(f^*, x_I)$ of the given classifier $f^*$ with respect to the in-distribution samples $x_I$ using this functional relationship $Q$. For example, the known performance $P(f^*,x_I)$ may be plugged into the functional relationship $Q$.

According to block 143, the performance $P(f^*, x)$ of the classifier $f^*$ with respect to the one or more samples $x$ may be determined based at least in part on pairwise divergences $dis(f^*, f', x)$ of the given classifier $f^*$ on the one hand and other classifiers $f'$ from the set $F$ on the other hand.

According to block 143a, the pairwise divergences $dis(f^*, f', x)$ may be aggregated. According to block 143b, the performance $P(f^*, x)$ of the classifier $f^*$ may then be determined based on the result of this aggregating.

According to block 143c, it may be checked whether the result of the aggregating fulfils a predetermined criterion. If this is the case (truth value 1), according to block 144, it may then be determined that the sample $x$ is misclassified by the given classifier $f^*$.

In the example shown in Figure 1, in step 150, based on the determined performance $P(f^*,x)$, an actuation signal 150a is computed. In step 160, a vehicle 50, a driving assistance system 51, a robot 60, a surveillance system 70, a quality assurance system 80, and/or a medical imaging system 90, may be actuated with this actuation signal.

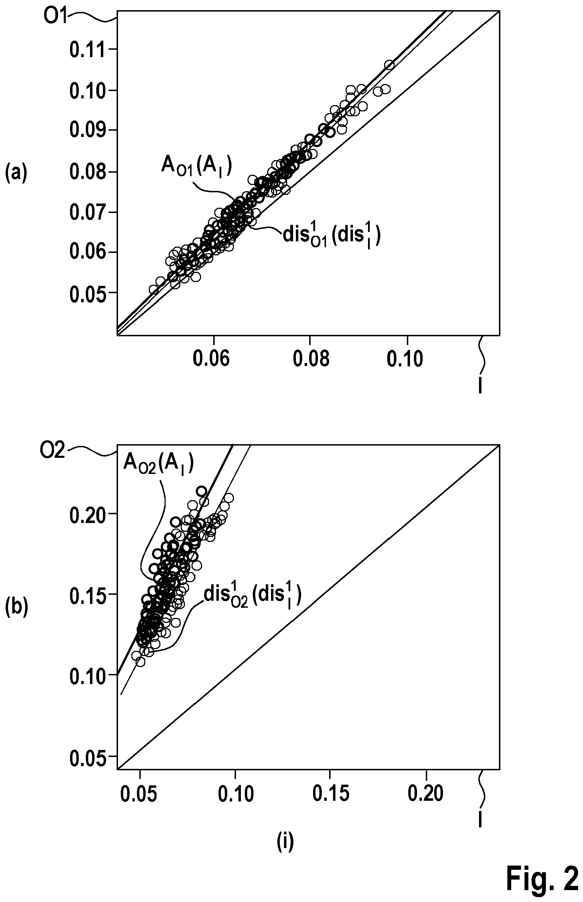

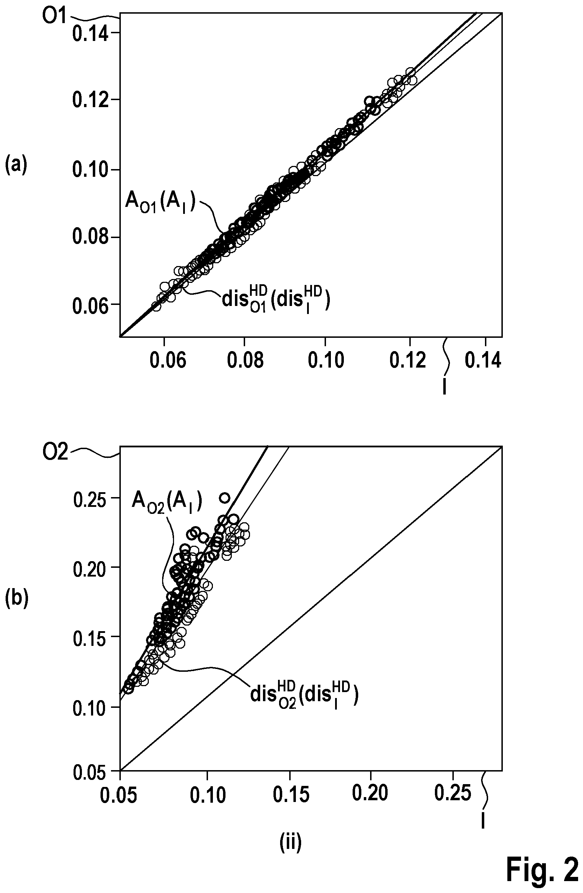

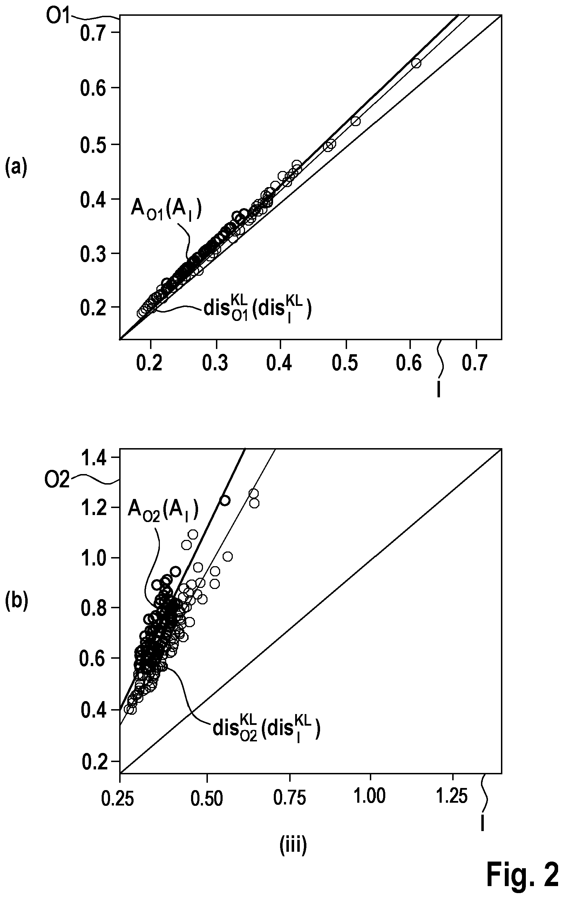

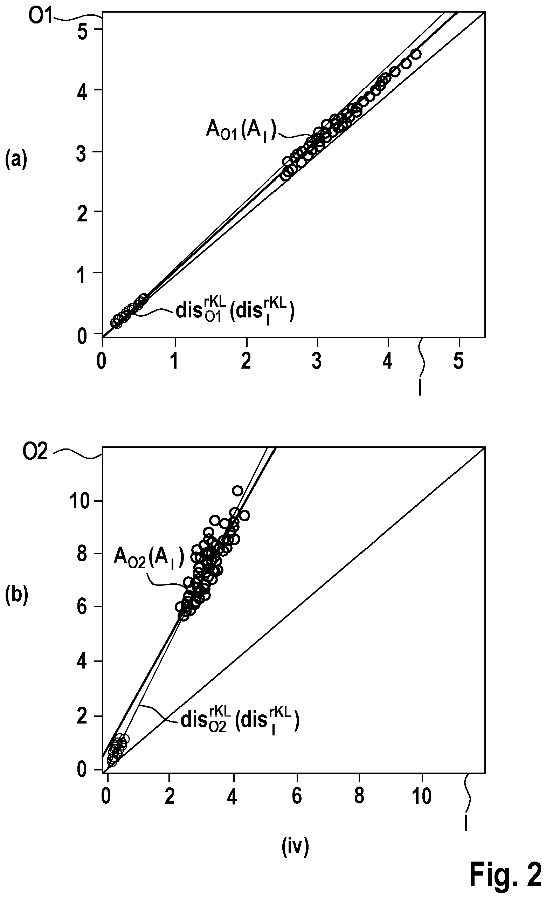

Figure 2 illustrates the benefit of computing pairwise divergences $dis(f, f', x)$ with a notion of divergence that is based on the classification scores $f_k(x)$ with respect to all available classes $k = 1, ..., K$ covered by the classifiers, rather than just the top-1 classification score. In each diagram shown in Figure 2,

- a disagreement notion $dis_{O1,O2}(f, f', x_O)$ with respect to out-of-distribution samples $x_O$ from a set $O1$, respectively $O2$, is plotted as a function of the disagreement notion $dis_I(f, f',x_I)$ with respect to in-distribution samples $x_I$; and
- the performance $P(f^*, x_O)$ of the given classifier $f^*$ with respect to the out-of-distribution samples $x_O$ from the set $O1$, respectively $O2$, is plotted as a function of the performance $P(f^*, x_I)$ of the given classifier $f^*$ with respect to the in-distribution samples $x_I$. The performance is measured in terms of the classification accuracy $A$ achieved on a respective labelled test dataset. It is therefore referred to as $A_{O1}(A_I)$ for $x_O \in O1$, respectively $A_{O2}(A_I)$ for $x_O \in O2$, in Figure 2.

The columns (i) to (iv) in Figure 2 are organized so that:

- in column (i), the disagreement notion $dis^1$ is based on the top-1 classification score as per the prior art;
- in column (ii), the disagreement notion $dis^{HD}$ is the Hellinger distance;
- in column (iii), the disagreement notion $dis^{KL}$ is the Kullback-Leibler divergence; and
- in column (iv), the disagreement notion $dis^{rKL}$ is the reverse Kullback-Leibler divergence.

The rows (a) and (b) in Figure 2 are organized so that:

- in row (a), the out-of-distribution samples $x_O$ come from the set $O1$ that has been produced by distorting the samples $x_I$ from the in-distribution set $I$ with fog of a first, lower strength; and
- in row (b), the out-of-distribution samples $x_O$ come from the set $O2$ that has been produced by distorting the samples $x_I$ from the in-distribution set $I$ with fog of a second, higher strength.

The more parallel the curves $A_{O1,O2}(A_I)$ and $dis_{O1,O2}(dis_I)$ are, the smaller the error is when re-using the (linear) functional dependence $R$ estimated from $dis_{O1,O2}(dis_I)$ as the functional dependence $Q$ that approximates $A_{O1,O2}(A_I)$ in order to compute $A_{O1,O2}$, which corresponds to the sought performance $P(f^*,x)$, from $A_I$, which corresponds to the known performance $P(f^*,x_I)$.

It is visible in Figure 2 that this desirable property is more pronounced for the advanced disagreement notions $dis^{HD}$, $dis^{KL}$ and $dis^{rKL}$ based on full classifier outputs $f_k(x)$ than for the simple disagreement notion $dis^1$ is based on the top-1 classification score. It is also visible that there is a limit as to the amount of distribution shift between the set $I$ on he one hand, and the sets $O1$ and $O2$ on the other hand. The larger the applied distortion, and thus the distribution shift compared to the in-distribution set $I$, the worse the approximation of $Q$ by $R$ becomes, and the larger the error in the finally determined performance $P(f^*,x)$ becomes.

**Claims**

1. A method (100) for predicting the performance $P(f^*, x)$ of a given classifier $f^*$ with respect to one or more given samples $x$ of input data, wherein the classifier $f^*$ is configured to map a sample $x$ of input data to a vector $y = f^*(x)$ of classification scores with respect to multiple classes of a given classification, comprising the steps of:

   • providing (110) further classifiers that, together with the given classifier $f^*$, form a set $F$ of classifiers $f$;
   • computing (120), for the one or more samples $x$, using each classifier $f$ from the set $F$ of classifiers, classification scores $f_k(x)$ with respect to all available classes $k = 1, ... , K$ covered by the classifiers;
   • determining (130), for pairs $(f, f')$ of classifiers $f$ and $f'$ from the set $F$, divergences of the classification scores $f_k(x)$ and $f'_k(x)$ for all $k = 1, ... , K$ as pairwise divergences $dis(f, f', x)$ of the classifiers $f$ and $f'$ with respect to the one or more samples $x$; and
   • determining (140) the performance $P(f^*, x)$ of the classifier $f^*$ with respect to the one or more samples $x$ based at least in part on pairwise divergences $dis(f^*, f', x)$ between the classifier $f^*$ and other classifiers $f'$.

2. The method (100) of claim 1, wherein

   • a set $I$ of in-distribution samples $x_I$ of input data from the distribution $D$ on which the classifiers have been trained is provided (105);
   • a performance $P(f^*, x_I)$ of the given classifier $f^*$ with respect to the in-distribution samples $x_I$ is provided (106);
   • a set $O$ of out-of-distribution samples $x_O$ that do not belong to the distribution $D$ is provided (107), wherein the set $O$ comprises the one or more given samples $x$;
   • for each sample $x_I$ from the set $I$ of in-distribution samples, pairwise divergences $dis(f, f', x_I)$ between classifiers $f$ and $f'$ are determined (131) as in-distribution divergences $dis_I(f,f')$;
   • for each sample $x_O$ from the set $O$ of out-of-distribution samples, pairwise divergences $dis(f, f', x_O)$ between classifiers $f$ and $f'$ are determined (132) as out-of-distribution divergences $dis_O(f,f')$;
   • a functional relationship $R(dis_O(f,f'), dis_I(f,f'))$ between out-of-distribution divergences $dis_O(f, f')$ and in-distribution divergences $dis_I(f, f')$ is estimated (141); and
   • based at least in part on this functional relationship $R$ and the known performance $P(f^*, x_I)$ of the given classifier $f^*$ with respect to the in-distribution samples $x_I$, the performance $P(f^*, x)$ is determined (142).

3. The method (100) of claim 2, wherein determining the performance $P(f^*, x)$ comprises:

   • determining (142a), based on the functional relationship $R$, a functional relationship $Q$ between performances $P(f, x_O)$ of classifiers $f$ from the set $F$ with respect to out-of-distribution samples $x_O$ and performances $P(f, x_I)$ from the set $F$ with respect to in-distribution samples $x_I$; and
   • determining (142b), using this functional relationship $Q$, the performance $P(f^*, x)$ from the known performance $P(f^*, x_I)$ of the given classifier $f^*$ with respect to the in-distribution samples $x_I$.

4. The method (100) of any one of claims 2 to 3, wherein the estimating of the functional relationship $R(dis_O(f, f'), dis_I(f,f'))$ comprises

   • setting up (141a) a functional dependency of $dis_O(f, f')$ from $dis_I(f, f')$ that comprises free parameters; and
   • optimizing (141b) the free parameters to fit the functional relationship $R(dis_O(f, f'), dis_I(f, f'))$ to the available in-distribution divergences $dis_I(f,f')$ and out-of-distribution divergences $dis_O(f,f')$.

5. The method (100) of any one of claims 2 to 4, wherein the functional relationship $R(dis_O(f, f'), dis_I(f, f'))$ is chosen (141c) to comprise a linear relationship with a bias and a slope.

6. The method (100) of any one of claims 1 to 5, wherein the performance $P(f^*, x)$ of the classifier $f^*$ with respect to the one or more samples $x$ is determined (143) based at least in part on pairwise divergences $dis(f^*, f', x)$ of the given classifier $f^*$ on the one hand and other classifiers $f'$ from the set $F$ on the other hand.

7. The method (100) of claim 6, wherein the pairwise divergences $dis(f^*, f', x)$ are aggregated (143a), and the performance $P(f^*, x)$ of the classifier $f^*$ is determined (143b) based on the result of this aggregating.

8. The method (100) of claim 7, wherein determining the performance $(f^*, x)$ comprises: in response to determining (143c) that the result of the aggregating fulfils a predetermined criterion, determining (143d) that the sample $x$ is misclassified by the given classifier $f^*$.

9. The method (100) of any one of claims 1 to 8, wherein the pairwise divergences $dis(f, f', x)$ of the classifiers $f$ and $f'$ are computed (133) as f-divergences that measure the difference between probability distributions defined by the classification scores $f_k(x)$ and $f'_k(x)$ as samples, respectively.

10. The method of claim 9, wherein the Hellinger distance, the Kullback-Leibler divergence, and/or the reverse Kullback-Leibler divergence, is chosen (133a) as the f-divergence.

11. The method (100) of any one of claims 1 to 10, wherein the sample $x$ of input data is chosen to comprise an image, and/or a point cloud, of measurement values.

12. The method (100) of any one of claims 1 to 11, further comprising:

  • computing (150), based on the determined performance $P(f^*,x)$, an actuation signal (150a); and
  • actuating (160) a vehicle (50), a driving assistance system (51), a robot (60), a surveillance system (70), a quality assurance system (80), and/or a medical imaging system (90), with the actuation signal.

13. A computer program, comprising machine-readable instructions that, when executed by one or more computers and/or compute instances, cause the one or more computers and/or compute instances to perform the method (100) of any one of claims 1 to 12.

14. A non-transitory machine-readable data carrier and/or a download product with the computer program of claim 13.

15. One or more computers with the computer program of claim 13, and/or with the machine-readable data carrier and/or download product of claim 14.

**Amended claims in accordance with Rule 137(2) EPC.**

1. A method (100) for predicting the performance $P(f^*, x)$ of a given classifier $f^*$ with respect to one or more given samples x of input data comprising an image with a regular and contiguous grid of pixels to which values of at least one measurement quantity, such as a light intensity, are assigned as pixel values, wherein the classifier $f^*$ is configured to map said image to a vector y = $f^*(x)$ of classification scores with respect to multiple classes of a given classification, comprising the steps of:

  • providing (110) further classifiers that, together with the given classifier $f^*$, form a set $F$ of classifiers $f$, wherein these further classifiers are

    ◦ trained on the same set $I$ of in-distribution samples $x_I$ of input data from the distribution D, but initialized differently, or
    ◦ trained on different sets $I$ of in-distribution samples $x_I$ of input data that are randomly drawn from one and the same distribution D;

  • computing (120), for the one or more samples x, using each classifier $f$ from the set $F$ of classifiers, classification scores $f_k(x)$ with respect to all available classes $k$ = 1, ... , $K$ covered by the classifiers;
  • determining (130), for pairs $(f, f')$ of classifiers $f$ and $f'$ from the set $F$, divergences of the classification scores $f_k(x)$ and $f'_k(x)$ for all $k$ = 1, ..., $K$ as pairwise divergences $dis(f, f', x)$ of the classifiers $f$ and $f'$ with respect to the one or more samples x; and
  • determining (140) the performance $P(f^*, x)$ of the classifier $f^*$ with respect to the one or more samples x based at least in part on pairwise divergences $dis(f^*, f', x)$ between the classifier $f^*$ and other classifiers $f'$.

2. The method (100) of claim 1, wherein

  • a set $I$ of in-distribution samples $x_I$ of input data from the distribution D on which the classifiers have been trained is provided (105);

• a performance $P(f^*, x_I)$ of the given classifier $f^*$ with respect to the in-distribution samples $x_I$ is provided (106);
• a set $O$ of out-of-distribution samples $x_O$ that do not belong to the distribution D is provided (107), wherein the set 0 comprises the one or more given samples x;
• for each sample $x_I$ from the set $I$ of in-distribution samples, pairwise divergences $dis(f, f', x_I)$ between classifiers $f$ and $f'$ are determined (131) as in-distribution divergences $dis_I(f, f')$;
• for each sample $x_O$ from the set $O$ of out-of-distribution samples, pairwise divergences $dis(f, f', x_O)$ between classifiers $f$ and $f'$ are determined (132) as out-of-distribution divergences $dis_O(f, f')$;
• a functional relationship $R(dis_O(f, f'), dis_I(f, f'))$ between out-of-distribution divergences $dis_O(f, f')$ and in-distribution divergences $dis_I(f, f')$ is estimated (141); and
• based at least in part on this functional relationship R and the known performance $P(f^*, x_I)$ of the given classifier $f^*$ with respect to the in-distribution samples $x_I$, the performance $P(f^*, x)$ is determined (142).

3. The method (100) of claim 2, wherein determining the performance $P(f^*, x)$ comprises:

   • determining (142a), based on the functional relationship R, a functional relationship Q between performances $P(f, x_O)$ of classifiers $f$ from the set $F$ with-respect to out-of-distribution samples $x_O$ and performances $P(f, x_I)$ from the set $F$ with-respect to in-distribution samples $x_I$; and
   • determining (142b), using this functional relationship Q, the performance $P(f^*, x)$ from the known performance $P(f^*, x_I)$ of the given classifier $f^*$ with respect to the in-distribution samples $x_I$.

4. The method (100) of any one of claims 2 to 3, wherein the estimating of the functional relationship $R(dis_O(f, f'), dis_I(f, f'))$ comprises

   • setting up (141a) a functional dependency of $dis_O(f, f')$ from $dis_I(f, f')$ that comprises free parameters; and
   • optimizing (141b) the free parameters to fit the functional relationship $R(dis_O(f, f'), dis_I(f, f'))$ to the available in-distribution divergences $dis_I(f, f')$ and out-of-distribution divergences $dis_O(f, f')$.

5. The method (100) of any one of claims 2 to 4, wherein the functional relationship $R(dis_O(f, f'), dis_I(f, f'))$ is chosen (141c) to comprise a linear relationship with a bias and a slope.

6. The method (100) of any one of claims 1 to 5, wherein the performance $P(f^*, x)$ of the classifier $f^*$ with respect to the one or more samples x is determined (143) based at least in part on pairwise divergences $dis(f^*, f', x)$ of the given classifier $f^*$ on the one hand and other classifiers $f'$ from the set F on the other hand.

7. The method (100) of claim 6, wherein the pairwise divergences $dis(f^*, f', x)$ are aggregated (143a), and the performance $P(f^*, x)$ of the classifier $f^*$ is determined (143b) based on the result of this aggregating.

8. The method (100) of claim 7, wherein determining the performance $(f^*, x)$ comprises: in response to determining (143c) that the result of the aggregating fulfils a predetermined criterion, determining (143d) that the sample x is misclassified by the given classifier $f^*$.

9. The method (100) of any one of claims 1 to 8, wherein the pairwise divergences $dis(f, f', x)$ of the classifiers $f$ and $f'$ are computed (133) as f-divergences that measure the difference between probability distributions defined by the classification scores $f_k(x)$ and $f_k'(x)$ as samples, respectively.

10. The method of claim 9, wherein the Hellinger distance, the Kullback-Leibler divergence, and/or the reverse Kullback-Leibler divergence, is chosen (133a) as the f-divergence.

11. The method (100) of any one of claims 1 to 10, wherein the sample x of input data is chosen to comprise a point cloud of measurement values.

12. The method (100) of any one of claims 1 to 11, further comprising:

   • computing (150), based on the determined performance $P(f^*, x)$, an actuation signal (150a); and
   • actuating (160) a vehicle (50), a driving assistance system (51), a robot (60), a surveillance system (70), a quality assurance system (80), and/or a medical imaging system (90), with the actuation signal.

13. A computer program, comprising machine-readable instructions that, when executed by one or more computers and/or compute instances, cause the one or more computers and/or compute instances to perform the method (100) of any one of claims 1 to 12.

14. A non-transitory machine-readable data carrier and/or a download product with the computer program of claim 13.

15. One or more computers with the computer program of claim 13, and/or with the machine-readable data carrier and/or download product of claim 14.

Fig. 1a

Fig. 1a

P (f*,x)

150

150a

160

150a

50,51,60,70,80,90

Fig. 1b

Fig. 2

Fig. 2

Fig. 2

Fig. 2

Europäisches
Patentamt

European
Patent Office

Office européen
des brevets

# EUROPEAN SEARCH REPORT

**Application Number**

EP 23 19 8857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Baek Christina ET AL: "Agreement-on-the-Line: Predicting the Performance of Neural Networks under Distribution Shift", arXiv (Cornell University), 11 May 2023 (2023-05-11), pages 1-32, XP093133975, Ithaca DOI: 10.48550/arxiv.2206.13089 Retrieved from the Internet: URL:https://arxiv.org/pdf/2206.13089.pdf [retrieved on 2024-02-22] * abstract * * Section 3.1 * * Section 4 * * Algorithm 1 * | 1-15 | INV. G06F16/906 G06N3/00 |
| X | HADY ELSAHAR ET AL: "To Annotate or Not? Predicting Performance Drop under Domain Shift", PROCEEDINGS OF THE 2019 CONFERENCE ON EMPIRICAL METHODS IN NATURAL LANGUAGE PROCESSING AND THE 9TH INTERNATIONAL JOINT CONFERENCE ON NATURAL LANGUAGE PROCESSING (EMNLP-IJCNLP), 5 November 2019 (2019-11-05), pages 2163-2173, XP093133919, DOI: 10.5281/zenodo.3446732 Retrieved from the Internet: URL:https://aclanthology.org/D19-1222.pdf> * abstract * * Section 2.1 * * Section 3.1 * | 1-15 | |

TECHNICAL FIELDS SEARCHED (IPC)

G06F
G06N

-/--

The present search report has been drawn up for all claims

| Place of search | Date of completion of the search | Examiner |
|---|---|---|
| Berlin | 22 February 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 23 19 8857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI ZEJU ET AL: "Estimating Model Performance Under Domain Shifts with Class-Specific Confidence Scores", 17 September 2022 (2022-09-17), 20220917, PAGE(S) 693 - 703, XP047633892, [retrieved on 2022-09-17] * abstract * * Section 2 * * figure 1 * | 1-15 | |
| T | Schirmer Mona ET AL: "Beyond Top-Class Agreement: Using Divergences to Forecast Performance under Distribution Shift", arXiv.org, 13 December 2023 (2023-12-13), pages 1-8, XP093133987, Ithaca DOI: 10.48550/arxiv.2312.08033 Retrieved from the Internet: URL:https://arxiv.org/pdf/2312.08033.pdf [retrieved on 2024-02-22] * the whole document * | 1-15 | |

TECHNICAL FIELDS SEARCHED (IPC)

The present search report has been drawn up for all claims

| Place of search | Date of completion of the search | Examiner |
|---|---|---|
| Berlin | 22 February 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)